# EUROPÄISCHE PATENTANMELDUNG

(11) **EP 4 736 617 A1**
(43) Veröffentlichungstag der Anmeldung: **06.05.2026**
(21) Anmeldenummer: 24209907.5
(22) Anmeldetag: 30.10.2024
(51) Int. Cl.: A01C 7/20, A01B 63/111

(54) **LANDWIRTSCHAFTLICHE SÄMASCHINE**

(71) Anmelder: Kverneland Group Soest GmbH, 59494 Soest (DE)
(72) Erfinder: SCHUMACHER, Ferdinand, 59494 Soest (DE); NEUMANN, Björn, 59494 Soest (DE); KOTTENSTEDDE, Gregor, 59494 Soest (DE)
(74) Vertreter: Bittner, Thomas L.

(57) **Zusammenfassung**

Die Erfindung betrifft eine landwirtschaftliche Sämaschine mit einer Reihenanordnung von Ausbringvorrichtungen, welche jeweils Folgendes aufweisen: eine Furchenbildungseinrichtung zum Ausbilden einer Furche mit einer Eindringtiefe in den Erdboden; ein hydraulisches Stellelement (10.1, ..., 10.n) mit einer ersten und zweiten Stellung zum Einstellen einer ersten und zweiten Eindringtiefe über eine zugeordnete Ventileinrichtung (15.1, ..., 15.n). Die Sämaschine umfasst ferner eine Steuereinrichtung (16), die mit einem zentralen hydraulischen Steuerventil (12) und der jeweiligen Ventileinrichtung funktional verbunden ist. Die Ventileinrichtung ist eingerichtet, die Fluidverbindung über eine jeweilige Hydraulikleitung (11.1, ..., 11.n) betriebsabhängig zu öffnen und zu schließen. Die Steuereinrichtung ist eingerichtet, die jeweilige Ventileinrichtung zum Verlagern des hydraulischen Stellelements in die erste oder zweite Stellung zu öffnen, wenn mittels der Steuereinrichtung für das zentrale Steuerventil für die mehreren Hydraulikleitungen gemeinsam der Abfluss oder Zufluss des Hydraulikfluids freigegeben ist und im Übrigen zu schließen.

## Beschreibung

Die Erfindung betrifft eine landwirtschaftliche Sämaschine.

### Hintergrund

Landwirtschaftliche Sämaschinen dienen dazu, ein Saatgut auszubringen. Die Sämaschine kann über eine quer zu einer Arbeitsrichtung ausgebildete Reihenanordnung von Ausbringvorrichtungen verfügen, die als eine jeweilige Säreihe ausgeführt sein können. Die Säreihen verfügen jeweils über eine Furchenbildungseinrichtung zum Herstellen einer Furche im Erdboden sowie eine zugeordnete Ausbringeinrichtung, mit der das Saatgut in der hergestellten Furche eingebracht wird. Die Saatkörner können als Einzelkörner oder in Gruppen von Saatkörnern ausgebracht werden.

Sämaschinen können hergerichtet sein, nicht nur das Saatgut, sondern auch ein Düngermaterial auszubringen. Hierzu kann eine Säreihe eine weitere Furchenbildungseinrichtung aufweisen, die dazu dient, eine weitere Furche für das hierin einzubringende Düngermaterial herzustellen. Die Furchenbildungseinrichtungen für Saatgut und Düngermaterial können in Fahrtrichtung hintereinander angeordnet sein.

Um das Saatgut und / oder das Düngermaterial in eine jeweils gewünschte Tiefe in den Erdboden einzubringen, können für die Furchenbildungseinrichtung unterschiedliche Eindringtiefen in den Erdboden eingestellt werden. Hierzu können zum Beispiel hydraulische Stellelemente verwendet werden, um für ein Bodenbearbeitungswerkzeug, beispielsweise ein oder mehrere Schneidscheiben, der Furchenbildungseinrichtung unterschiedliche Eindringtiefen im Erdboden einzustellen.

### Zusammenfassung

Aufgabe der Erfindung ist es, eine landwirtschaftliche Sämaschine anzugeben, bei der Furchenbildungseinrichtungen einer Reihenanordnung von Ausbringvorrichtungen effizient und flexibel einstellbar sind.

Zur Lösung ist eine landwirtschaftliche Sämaschine nach dem unabhängigen Anspruch 1 geschaffen. Ausgestaltungen sind Gegenstand von abhängigen Unteransprüchen.

Nach einem Aspekt ist eine landwirtschaftliche Sämaschine mit einer quer zu einer Fahrt- oder Arbeitsrichtung ausgebildeten Reihenanordnung von Ausbringvorrichtungen geschaffen. Die Ausbringvorrichtungen weisen jeweils Folgendes auf: eine Furchenbildungseinrichtung, bei dem ein Bodenbearbeitungswerkzeug eingerichtet ist, im Betrieb zum Ausbilden einer Furche mit einer Eindringtiefe in den Erdboden einzudringen; ein hydraulisches Stellelement, welches der Furchenbildungseinrichtung zugeordnet und zum Einstellen einer ersten Eindringtiefe für das Bodenbearbeitungswerkzeug in eine erste Stellung und zum Einstellen einer zweiten Eindringtiefe für das Bodenbearbeitungswerkzeug, die von der ersten Eindringtiefe verschieden ist, in eine zweite Stellung verlagerbar ist, welche von der ersten Stellung verschieden ist; und eine Ventileinrichtung, die dem hydraulischen Stellelement zugeordnet ist; einem zentralen hydraulischen Steuerventil und Hydraulikleitungen. Die landwirtschaftliche Sämaschine weist weiterhin ein zentrales Steuerventil und Hydraulikleitungen auf, wobei für das hydraulische Stellelement der Ausbringvorrichtungen jeweils über eine der Hydraulikleitungen eine Fluidverbindung zu dem zentralen hydraulischen Steuerventil ausgebildet ist und das zentrale hydraulische Steuerventil eingerichtet ist, für mehrere der Hydraulikleitungen gemeinsam einen Zufluss eines Hydraulikfluids aus einem Reservoir sowie einen Abfluss des Hydraulikfluids in das Reservoir betriebsabhängig freizugeben. Weiterhin verfügt die landwirtschaftliche Sämaschine über eine Steuereinrichtung, die mit dem zentralen hydraulischen Steuerventil und der jeweiligen Ventileinrichtung der Ausbringvorrichtungen funktional verbunden ist. Die Ventileinrichtung ist der Hydraulikleitung des jeweiligen hydraulischen Stellelements zugeordnet und eingerichtet, die Fluidverbindung über die jeweilige Hydraulikleitung betriebsabhängig zu öffnen und zu schließen. Hierbei kann die Ventileinrichtung in der Hydraulikleitung des jeweiligen hydraulischen Stellelements selbst und / oder in dem hydraulischen Stellelement gebildet sein, was es jeweils ermöglicht, die Fluidverbindung zum hydraulischen Stellelement betriebsabhängig zu öffnen und zu schließen.

Die Steuereinrichtung ist eingerichtet, beim gemeinsamen Zufluss oder Abfluss des Hydraulikfluids für wenigstens einen Teil der mehreren Hydraulikleitungen die jeweilige Ventileinrichtung (i) zum Verlagern des hydraulischen Stellelements in die erste Stellung zu öffnen, wenn mittels der Steuereinrichtung für das zentrale Steuerventil für die mehreren Hydraulikleitungen gemeinsam der Abfluss des Hydraulikfluids in das Reservoir freigegeben ist, und (ii) zum Verlagern des hydraulischen Stellelements in die zweite Stellung zu öffnen, wenn mittels der Steuereinrichtung für das zentrale hydraulische Steuerventil für die mehreren Hydraulikleitungen gemeinsam der Zufluss des Hydraulikfluids aus dem Reservoir freigegeben ist. Weiterhin ist die Steuereinrichtung eingerichtet, für wenigstens den Teil der mehreren Hydraulikleitungen die jeweilige Ventileinrichtung im Übrigen zu schließen.

Bei der landwirtschaftlichen Sämaschine ist einerseits das zentrale Steuerventil vorgesehen, welches den Zufluss des Hydraulikfluids aus dem Reservoir wie auch den Abfluss des Hydraulikfluids in das Reservoir für die mehreren Hydraulikleitungen gemeinsam regelt, derart, dass für die mehreren Hydraulikleitungen entweder gemeinsam und gleichzeitig ein Zufluss oder ein Abfluss ermöglicht ist. Andererseits verfügt jede der Ausbringvorrichtungen der Reihenanordnung über die Ventileinrichtung in der jeweiligen Hydraulikleitung, welche das hydraulische Stellelement der Ausbringvorrichtung mit dem zentralen Steuerventil des Hydrauliksystems verbindet.

Mit Hilfe der jeweiligen Ventileinrichtung ist eine individuelle Steuerung für Zufluss und Abfluss des Hydraulikfluids zu dem hydraulischen Stellelement und von diesem weg einstellbar, auch wenn Zufluss und Abfluss für mehrere oder alle Hydraulikleitungen durch das zentrale Steuerventil gemeinsam, also nicht individuell eingestellt werden. Ist zum Beispiel mittels des zentralen Steuerventils ein Zufluss des Hydraulikfluids in die mehreren Hydraulikleitungen von mehreren Ausbringvorrichtungen eingestellt, können trotzdem ein oder mehrere Ventileinrichtungen geschlossen bleiben, so dass der individuelle Zufluss zu dem jeweils zugeordneten hydraulischen Stellelement gesperrt ist, wohingegen andere der Ventileinrichtungen in einem Teil der mehreren Hydraulikleitungen geöffnet sind, was hier den Zufluss zum jeweils zugeordneten hydraulischen Stellelement ermöglicht.

Zufluss und Abfluss ermöglichen jeweils für das hydraulische Stellelement eine Änderung der Stellung, um zum Beispiel mit Hilfe der unterschiedlichen Stellungen des hydraulischen Stellelements verschiedene Eindringtiefen für das Bodenbearbeitungswerkzeug der Furchenbildungseinrichtung einzustellen.

Das Zusammenwirken von zentralem Steuerventil einerseits und individuellen Ventileinrichtungen in den Hydraulikleitungen, die zu den hydraulischen Stellelementen in den Ausbringvorrichtungen führen, andererseits ermöglicht eine individuelle und separate betriebsabhängige Steuerung der hydraulischen Stellelemente, und so insbesondere eine individuelle Einstellung der jeweiligen Eindringtiefe für das Bodenbearbeitungswerkzeug der Furchenbildungseinrichtung.

In einer Ausgestaltung kann vorgesehen sein, die Ventileinrichtung in das zugeordnete hydraulische Stellelement zu integrieren, derart, dass die Ventileinrichtung Der Furchenbildungseinrichtung kann eine Ausbringeinrichtung zugeordnet sein, welche eingerichtet ist, ein Saatgut und / oder ein Düngermaterial in die mit Hilfe der Furchenbildungseinrichtung hergestellte Furche auszubringen. Unterschiedliche Ausgestaltungen für solche Ausbringeinrichtungen, die zum Beispiel für eine Einzelkornsaat hergerichtet sein können, sind als solche bekannt, insbesondere in Kombination mit unterschiedlichen Furchenbildungseinrichtungen, die sich zum Beispiel hinsichtlich des Bodenbearbeitungswerkzeugs unterscheiden können, dass zum Herstellen der Furche in den Erdboden eindringt.

Ist die Ausbringeinrichtung für das Ausbringen eines Düngermaterials eingerichtet, kann dies ein granulares Düngermaterial oder ein flüssiges Düngermaterial sein.

Die Steuereinrichtung kann weiterhin eingerichtet sein, die Ventileinrichtung in wenigstens einer ersten der mehreren Hydraulikleitungen beim gemeinsamen Zufluss des Hydraulikfluids zu schließen. Mittels Schließen der Ventileinrichtung in der ersten Hydraulikleitung sind Zufluss sowie Abfluss des Hydraulikfluids für das zugeordnete hydraulische Stellelement gesperrt. Dieses bedeutet, dass das hydraulische Stellelement in seiner momentanen Stellung verbleibt, so dass zum Beispiel die eingestellte Eindringtiefe für das Bodenbearbeitungswerkzeug der Furchenbildungseinrichtung unverändert bleibt. Für die anderen der mehreren Hydraulikleitungen ist die jeweilige Ventileinrichtung demgegenüber geöffnet, so dass der Zufluss zum jeweils zugeordneten hydraulischen Stellelement zum Ändern der Stellung ermöglicht ist.

Die Steuereinrichtung kann weiterhin eingerichtet sein, die Ventileinrichtung in wenigstens einer zweiten der mehreren Hydraulikleitungen beim gemeinsamen Abfluss des Hydraulikfluids die Ventileinrichtung zu schließen. Bei dieser Ausgestaltung ist die Ventileinrichtung in der wenigstens einen zweiten Hydraulikleitung geschlossen, so dass ein Abfluss des hydraulischen Fluids nicht stattfinden kann, obwohl mittels des zentralen hydraulischen Steuerventils ein Abfluss des Hydraulikfluids ermöglicht ist. Das zugeordnete hydraulische Stellelement verbleibt in seiner momentanen Stellung. Für die übrigen der mehreren Hydraulikleitungen ist die jeweilige Ventileinrichtung geöffnet, was den Abfluss des Hydraulikfluids zum Einstellen der geänderten Stellung des hydraulischen Stellelements ermöglicht.

Die Ausbringvorrichtungen können jeweils eine dem hydraulischen Stellelement zugeordnete Messeinrichtung aufweisen, die mit der Steuereinrichtung funktional verbunden und eingerichtet sind, einen Messparameter zu erfassen, welcher unterschiedliche Stellungen des hydraulischen Stellelementes beim Einstellen der Eindringtiefe für die Furchenbildungseinrichtung anzeigt. Die Messeinrichtung kann eingerichtet sein, einen oder mehrere Messparameter aus der folgenden Gruppe zu erfassen: räumliche Position des hydraulischen Stellelements, Winkel einer Neigung des hydraulischen Stellelements, zum Beispiel in Bezug auf die Erdbodenoberfläche, und äußerer Druck, welcher von dem hydraulischen Stellelement bereitgestellt ist.

Die Steuereinrichtung kann weiterhin eingerichtet sein, die jeweilige Ventileinrichtung in Abhängigkeit von dem mittels der Messeinrichtung für das zugeordnete hydraulische Stellelement erfassten Messparameter zu öffnen und zu schließen.

Das hydraulische Stellelement kann in der ersten Stellung eine erste Längenausdehnung und der zweiten Stellung eine zweite Längenausdehnung aufweisen, die von der ersten Längsausdehnung verschiedene ist. Bei dieser oder anderen Ausführungsformen kann das hydraulische Stellelement mit mindestens einem hydraulischen Zylinder gebildet sein, welcher zum Einstellen der unterschiedlichen Stellungen mittels Ausfahren und Einfahren seine Länge verändern kann.

Das hydraulische Stellelement kann eingerichtet sein, beim Verlagern aus der zweiten in die erste Stellung den Abfluss des Hydraulikfluids über die Ventileinrichtung in der Hydraulikleitung aufgrund einer Rückstellkraft zu bewirken, welche beim Kontakt der Furchenbildungseinrichtung mit dem Erdboden auf die Furchenbildungseinrichtung ausgeübt wird. Der Abfluss oder Rückfluss des hydraulischen Fluids über die Ventileinrichtung in der Hydraulikleitung kann allein durch die Rückstellkraft bewirkbar sein. Die Rückstellkraft kann eine auf das Bodenbearbeitungswerkzeug zum Herstellen der Furche ausgeübte Kraft beim Kontakt mit dem Erdboden sein. Zum Beispiel kann die Rückstellkraft ein Verschwenken des Bodenbearbeitungswerkzeugs um eine Schwenkachse bewirken, wodurch die hierbei ausgeübte Rückstellkraft auf das hydraulische Stellelement wirken kann, was den Abfluss oder Rückfluss des Hydraulikfluids über die Ventileinrichtung und die Hydraulikleitung zum zentralen hydraulischen Steuerventil hin bewirkt.

Bei der Furchenbildungseinrichtung kann das Bodenbearbeitungswerkzeug mit einer Schneideinrichtung gebildet sein. Die Furchenbildungseinrichtung kann eine der Schneideinrichtung zugeordnete Tiefeneinstelleinrichtung aufweisen, die eingerichtet ist, mittels Verlagern in eine erste und eine zweite Stellung für die Schneideinrichtung eine erste und eine zweite Eindringtiefe zum Ausbilden der Furche einzustellen; und das hydraulische Stellelement kann mit der Tiefeneinstelleinrichtung verbunden und eingerichtet sein, die Tiefeneinstelleinrichtung in die erste und die zweite Stellung zu verlagern. Mit Hilfe der Tiefeneinstelleinrichtung ist die Eindringtiefe für die Schneideinrichtung einstellbar, wobei dies mittels Verstellen des hydraulischen Stellelements bewirkt wird.

Die Schneideinrichtung kann mindestens eine Schneidscheibe aufweisen, für die mittels der Tiefeneinstelleinrichtung die erste und die zweite Eindringtiefe zum Ausbilden der Furche einstellbar sind. Die Schneideinrichtung kann zwei oder mehr Schneidscheiben aufweisen. Zwei der Schneidscheiben können einer V-Stellung entsprechend relativ zueinander angeordnet sein, wobei ein Abstand zwischen den beiden Schneidscheiben zum Erdboden hin abnimmt.

Die Tiefeneinstelleinrichtung kann mindestens ein Tiefeneinstellrad aufweisen, welches im Betrieb zum Ausbilden der Furche auf dem Erdboden rollt. Die Tiefeneinstelleinrichtung kann auch zwei oder mehr Tiefeneinstellräder aufweisen, die in einer Ausführungsform auf gegenüberliegenden Seiten der Schneideinrichtung angeordnet sein können, beispielsweise auf gegenüberliegenden Seiten einer oder mehrerer Schneidscheiben, wobei die Tiefeneinstellräder in Bezug auf die Schneidscheiben außenliegend angeordnet sein können. Zum Einstellen der unterschiedlichen Eindringtiefen beim Herstellen der Furche kann mittels Einstellen des hydraulischen Stellelements eine Relativlage zwischen Schneideinrichtung und Tiefeneinstellrad oder Tiefeneinstellrädern vorgesehen sein.

Die Steuereinrichtung kann mit einer Sensoreinrichtung funktional verbunden sein, die eingerichtet ist, ein Betriebsparameter für das Ausbringen des Saatguts und / oder des Düngermaterials zu erfassen, wobei die Steuereinrichtung eingerichtet ist, von der Sensoreinrichtung Sensorsignale zu empfangen, die den Betriebsparameter anzeigen, und zum Einstellen der Eindringtiefe für die Furchenbildungseinrichtung das zentrale hydraulische Steuerventil und / oder die Ventileinrichtung zu steuern. Zum Beispiel können mit Hilfe der Sensoreinrichtung ein oder mehrere Betriebsparameter für die landwirtschaftliche Sämaschine und / oder einen Schlepper erfasst werden, welcher die landwirtschaftliche Sämaschine zieht, sofern es sich bei dieser nicht um eine selbstfahrende Sämaschine handelt.

Die Sensoreinrichtung kann eingerichtet sein, mindestens einen Betriebsparameter aus der folgenden Gruppe zu erfassen: Bodenfeuchtigkeit, Lufttemperatur, Luftfeuchtigkeit, Niederschlag (Regensensor), Fahrgeschwindigkeit und geografische Position. Mit Hilfe der Anordnung mit dem zentralen hydraulischen Steuerventil und jeweiliger Ventileinrichtung in den Hydraulikleitungen für die hydraulischen Stellelemente kann zum Beispiel die Eindringtiefe für das Bodenbearbeitungswerkzeug für alle Arbeitsvorrichtungen der Reihenanordnung in gleicher Weise eingestellt werden. Alternativ kann für zwei oder mehrere Ausbringvorrichtungen eine unterschiedliche Eindringtiefe eingestellt werden.

Die Ausbringvorrichtungen können weiterhin jeweils Folgendes aufweisen: eine weitere Furchenbildungseinrichtung, die eingerichtet ist, im Betrieb zum Ausbilden einer Furche in den Erdboden mit einer Eindringtiefe einzudringen; ein weiteres hydraulisches Stellelement, welches der weiteren Furchenbildungseinrichtung zugeordnet ist und zum Einstellen einer ersten Eindringtiefe in eine erste Stellung und zum Einstellen einer zweiten Eindringtiefe, die von der ersten Eindringtiefe verschieden ist, in eine zweite Stellung verlagerbar ist, welche von der ersten Stellung verschieden ist; und eine weitere Ventileinrichtung, die dem weiteren hydraulischen Stellelement zugeordnet ist. Die weitere Furchenbildungseinrichtung sowie das weitere hydraulische Stellelement und die weitere Ventileinrichtung können der Furchenbildungseinrichtung, dem hydraulischen Stellelement sowie der Ventileinrichtung entsprechend ausgeführt sein, wie dies vorangehend für verschiedene Ausgestaltungen erläutert wurde. Die Furchenbildungseinrichtung und die weitere Furchenbildungseinrichtung können in Fahrtrichtung hintereinanderliegend angeordnet sein.

Es kann vorgesehen sein, dass die Furchenbildungseinrichtung eingerichtet ist, eine Furche zum Ausbringen von Saatgut bereitzustellen, wohingegen die weitere Furchenbildungseinrichtung eingerichtet ist, eine Furche für das Ausbringen eines Düngermaterials herzustellen, beispielsweise vor dem anschließenden Ausbringen des Saatguts.

Die Furchenbildungseinrichtung und die weitere Furchenbildungseinrichtungen können mit Hilfe der Anordnung mit dem zentralen hydraulischen Steuerventil und jeweiliger Ventileinrichtung zum Einstellen unterschiedlicher Eindringtiefen für die Furchenbildungseinrichtung einerseits und die weitere Furchenbildungseinrichtung andererseits eingestellt werden. Auf diese Weise ist es beispielsweise ermöglicht, das Düngermaterial tiefer in den Erdboden einzubringen als das Saatgut. Hierzu verfügen die hydraulischen Stellelemente der Ausbringvorrichtung über getrennte Hydraulikleitungen und zugeordnete Ventileinrichtung, so dass eine getrennte Einstellung für die Furchenbildungseinrichtung und die weitere Furchenbildungseinrichtung in ein und derselben Ausbringvorrichtung ermöglicht ist.

Der weiteren Furchenbildungseinrichtung kann eine weitere Ausbringeinrichtung vergleichbar der Ausbringeinrichtung zugeordnet sein.

Mit der quer zur Arbeitsrichtung ausgebildeten Reihenanordnung von Ausbringvorrichtungen kann eine Reihenanordnung von Säreihen gebildet sein. Die Ausbringvorrichtungen sind als eine jeweilige Säreihe ausgeführt, für die beim Herstellen der jeweiligen Furche die Eindringtiefe des Bodenbearbeitungswerkzeugs, insbesondere von Schneidscheiben, individuell einstellbar ist.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung einer landwirtschaftlichen Sämaschine, die an einen Schlepper angehängt ist;
- Fig. 2: eine schematische Darstellung einer Anordnung von funktionalen Komponenten eines hydraulischen Systems einer landwirtschaftlichen Sämaschine;
- Fig. 3: eine schematische Darstellung der Anordnung aus Fig. 2 zum Erläutern einer Betriebsart;
- Fig. 4: eine schematische Darstellung der Anordnung aus Fig. 2 zum Erläutern einer anderen Betriebsart;
- Fig. 5: eine schematische Darstellung einer Furchenbildungseinrichtung von der Seite mit einem Bodenbearbeitungswerkzeug in unterschiedlichen Stellungen;
- Fig. 6: eine schematische Darstellung der Furchenbildungseinrichtung aus Fig. 5 von der Seite mit dem Bodenbearbeitungswerkzeug in einer ausgehobenen Stellung und
- Fig. 7: eine schematische Darstellung einer Anordnung für eine jeweilige Ausbringvorrichtung der landwirtschaftlichen Sämaschine mit einer Parallelogramm-Halterung.

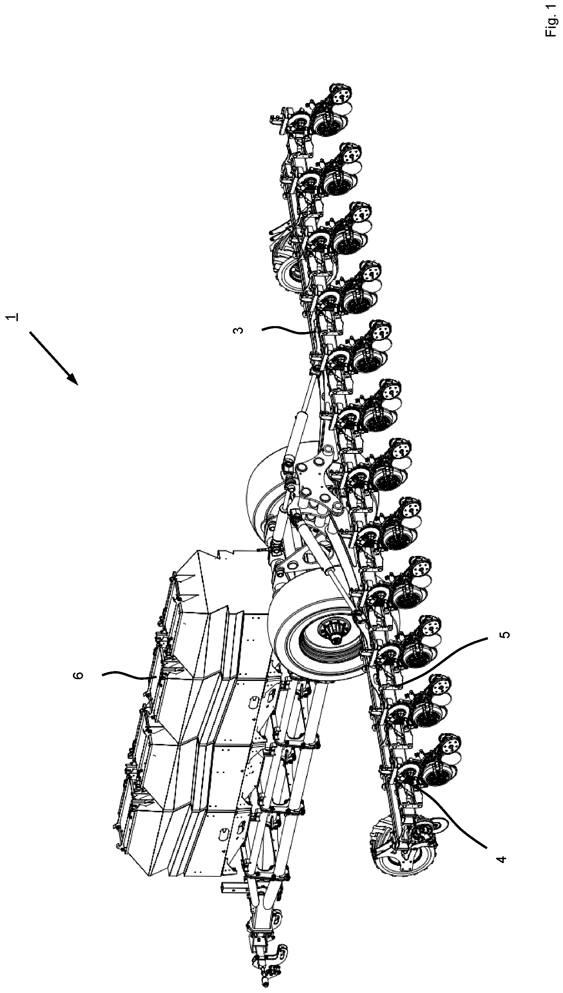

Fig. 1 zeigt eine schematische perspektivische Darstellung einer landwirtschaftlichen Maschinekombination 1 mit einer Sämaschine 2, die an einen Schlepper oder Traktor (nicht dargestellt) angehängt werden kann. Die landwirtschaftliche Sämaschine 2 weist eine Reihenanordnung 3 von Ausbringvorrichtungen 4 auf, die an einem Rahmen 5 angeordnet und sich im Betrieb quer zu einer Fahrt- oder Arbeitsrichtung A erstreckt, insbesondere derart, dass die Ausbringvorrichtungen 4 der Reihenanordnung 3, die zum Beispiel jeweils als eine Säreihe ausgeführt sein können, nebeneinanderliegend angeordnet sind, wie dies Fig. 1 zeigt. Die Ausbringvorrichtungen 4 sind jeweils eingerichtet, ein Saatgut und / oder ein Düngermaterial in einer Furche im Erdboden einzubringen. Das auszubringende Saatgut ist in einem Tank 6 aufnehmbar, um es von dort zu den Ausbringvorrichtungen 4 zu verteilen, zum Beispiel mittels Transport über Druckluftleitungen.

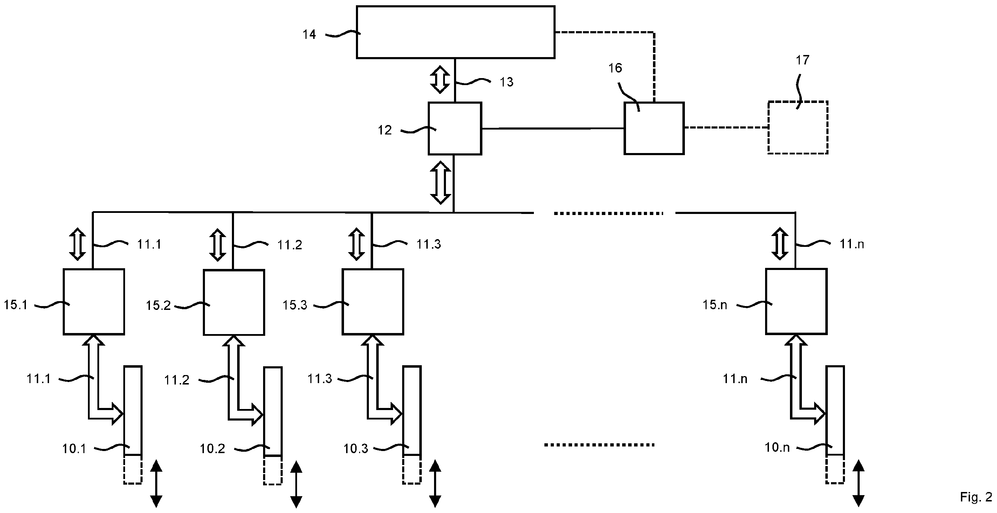

Fig. 2 zeigt eine schematische Darstellung einer Anordnung von funktionalen Komponenten eines hydraulischen Systems der landwirtschaftlichen Sämaschine 2.

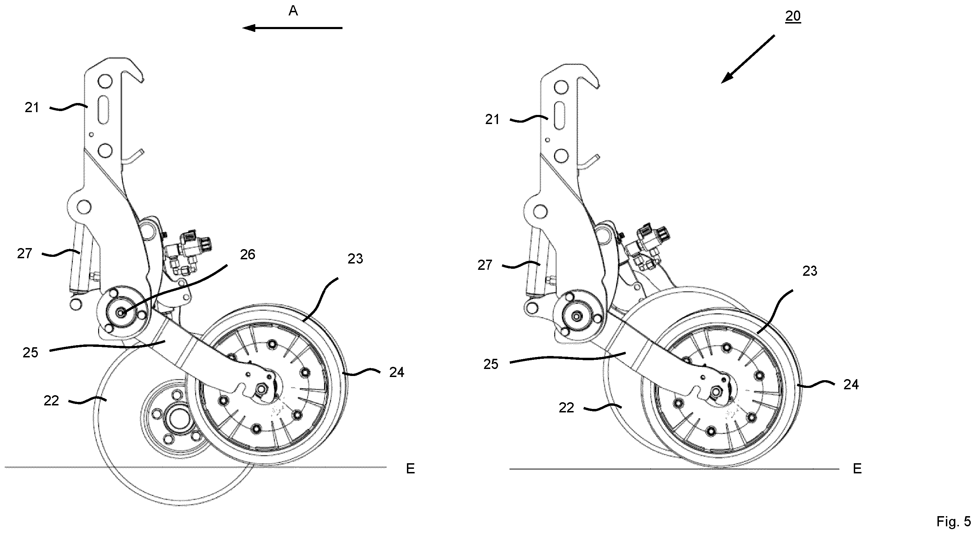

Zum Herstellen der Furche im Erdboden weisen die Ausbringvorrichtungen 4 jeweils mindestens eine Furchenbildungseinrichtung auf (vgl. weitere Erläuterungen unten unter Bezugnahme auf die Fig. 5 bis 7). Um für die Furchenbildungseinrichtungen eine Eindringtiefe eines Bodenbearbeitungswerkzeugs, zum Beispiel einer oder mehrerer Schneidscheiben, in den Erdboden beim Herstellen der Furche einzustellen, sind bei der Anordnung nach Fig. 2 mehrere hydraulische Stellelemente 10.1, ..., 10.n vorgesehen, die jeweils einer der Ausbringvorrichtungen 4 in der Reihenanordnung 3 zugeordnet und eingerichtet sind, zwischen unterschiedlichen Stellungen verlagert zu werden, um unterschiedliche Eindringtiefen für das jeweilige Bodenbearbeitungswerkzeug der Ausbringvorrichtung 4 einzustellen.

Die hydraulischen Stellelemente 10.1, ..., 10.n sind über eine jeweilige Hydraulikleitung 11.1, ..., 11.n mit einem zentralen hydraulischen Steuerventil 12 verbunden, welches seinerseits über eine Hydraulikleitung 13 mit einem hydraulischen Versorgungssystem 14 verbunden ist. Mit Hilfe des hydraulischen Versorgungssystems 14, das zum Beispiel auf einem Traktor ausgebildet sein kann, ist ein Zufluss eines mit Druck beaufschlagten hydraulischen Fluids bereitgestellt. In ähnlicher Weise kann das hydraulische Fluid über die Hydraulikleitung 13 wieder zu dem hydraulischen Versorgungssystem 14 ab- oder zurückfließen, insbesondere in ein Reservoir des hydraulischen Versorgungssystems 14.

In den Hydraulikleitung 11.1, ..., 11.n der Ausbringvorrichtungen 4 ist jeweils eine Ventileinrichtung 15.1, ..., 15.n angeordnet, die dem jeweiligen hydraulischen Stellelement 10.1, ..., 10.n zugeordnet ist. In einer anderen Ausgestaltung (nicht dargestellt) kann vorgesehen sein, die jeweilige Ventileinrichtung 15.1, ..., 15.n zumindest teilweise in das zugeordnete hydraulische Stellelement 10.1, ..., 10.n zu integrieren.

Mit Hilfe der Ventileinrichtung 15.1, ..., 15.n kann die zugeordnete Hydraulikleitung 11.1, ..., 11.n geöffnet und geschlossen werden, so dass ein Zufluss des hydraulischen Fluids von dem zentralen hydraulischen Steuerventil 12 oder ein Abfluss zu diesem hin durchgelassen oder gesperrt werden kann. Mittels Fließen des hydraulischen Fluids in das entsprechende Stellelement 10.1, ..., 10.n kann dieses von einer ersten (zum Beispiel eingefahrenen Stellung) in eine zweite (zum Beispiel ausgefahrene) Stellung verlagert werden, wobei letztere in Fig. 2 für das jeweilige hydraulische Stellelement 10.1, ..., 10.n gestrichelt gezeigt ist. Hierdurch weist das hydraulische Stellelement 10.1, ..., 10.n in den unterschiedlichen Stellungen insbesondere eine unterschiedliche Länge oder Erstreckung auf. Zum Beispiel ist das hydraulische Stellelement 10.1, ..., 10.n jeweils mit einem hydraulischen Zylinder ausgeführt, der in den unterschiedlichen Stellungen eine unterschiedliche Länge aufweist.

Mit Hilfe des zentralen hydraulischen Steuerventils 12 wird einerseits für alle Hydraulikleitungen 11.1, ..., 11.n oder mindestens eine Teilmenge hiervon gemeinsam der Zufluss oder der Abfluss des hydraulischen Fluids eingestellt. Andererseits sind die Ventileinrichtungen 15.1, ..., 15.n in den Hydraulikleitungen 11.1, ..., 11.n jeweils individuell einstellbar, um den Zufluss /Abfluss von dem zentralen hydraulischen Steuerventil 12 über die zugeordnete Hydraulikleitung 11.1, ..., 11.n separat für die jeweilige Ausbringvorrichtung freizugeben oder zu sperren. Auf diese Weise ist eine effiziente und individuelle Steuerung der hydraulischen Steuerelemente 10.1, ..., 10.n einzeln oder in Gruppen ermöglicht.

Zum Steuern des zentralen hydraulischen Steuerventils 12, also insbesondere zum Öffnen und Schließen des Zu- / Abflusses des hydraulischen Fluids ist eine Steuereinrichtung 16 vorgesehen, die zum Beispiel auf dem Traktor, welcher die landwirtschaftliche Sämaschine 1 zieht, ausgebildet sein kann. Hierbei kann die Steuereinrichtung 16 in ein Traktor-Implement-Managementsystem integriert sein. Die Steuereinrichtung 16 kann zum Beispiel über ein Terminal 17 im Traktor Nutzer-Eingaben zur Steuerung des Flusses des hydraulischen Fluids empfangen. Alternativ oder ergänzend kann vorgesehen sein, dass die Steuereinrichtung 16 Steuerbefehle über ein mobiles Nutzerendgerät (nicht dargestellt) empfängt, zum Beispiel ein Mobiltelefon. Gemäß der Darstellung in Fig. 2 kann die Steuereinrichtung 16 optional mit dem hydraulischen Versorgungssystem 14 verbunden sein, beispielsweise um eine kontinuierliche oder unterbrochene Bereitstellung des Zu- / Abflusses des Hydraulikfluids über die Fluidverbindung 13 zu initiieren und zu stoppen.

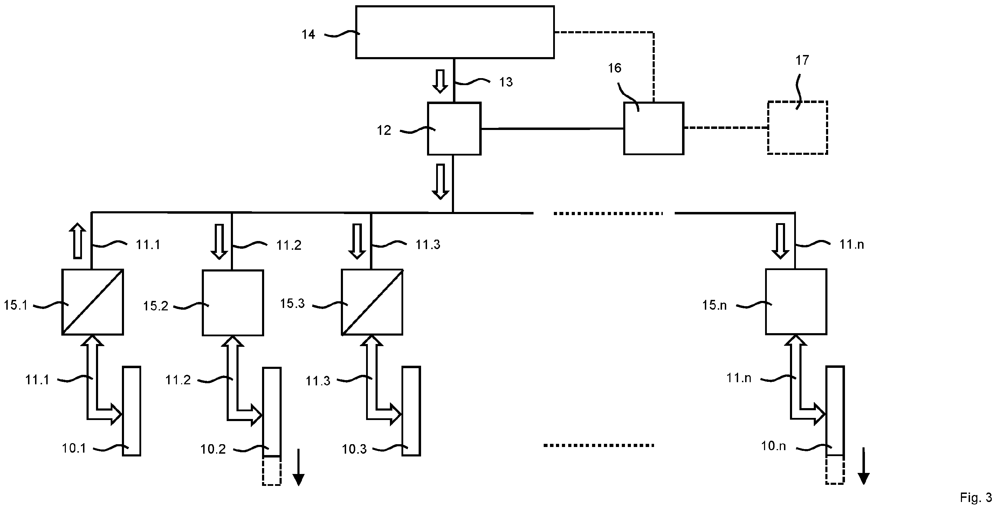

Fig. 3 zeigt eine schematische Darstellung einer Betriebsart der Anordnung aus Fig. 2. Das zentral hydraulische Steuerventil 12 ist geöffnet und ermöglicht so einen Zufluss des hydraulischen Fluids in die Hydraulikleitungen 11.1, ..., 11.n. Ein Teil der Ventileinrichtungen 15.1, ..., 15.n ist geöffnet und ermöglicht so den Zufluss des Hydraulikfluids zum hydraulischen Stellelement. Gemäß Fig. 3 betrifft dies insbesondere die Ventileinrichtungen 15.2, und 15.n. Die zugeordneten hydraulischen Stellelemente 10.2, 10.n werden so aus einer ersten Stellung in die gestrichelt gezeichnete zweite Stellung verlagert. Demgegenüber sind die Ventileinrichtungen 15.1, 15.3 anderer der Ausbringvorrichtungen 4 gemäß Fig. 3 gesperrt oder geschlossen (schematisch gezeigt anhand der schräg verlaufenden Linien), so dass der Zufluss des Hydraulikfluids nicht zu den zugeordneten hydraulischen Stellelementen 10.1, 10.3 gelangen kann, die daher in der ersten (eingefahrenen) Stellung verbleiben.

Zum Steuern der Ventileinrichtungen 15.1, ..., 15.n, also zum Öffnen und Schließen in Reaktion auf entsprechende Steuersignale, können diese ebenso mit der Steuereinrichtung 16 funktional verbunden sein, um entsprechende Steuersignale zu übertragen. Zur Vereinfachung der Darstellung sind funktionale Verbindungen zwischen der Steuereinrichtung 16 und den Ventileinrichtungen 15.1, ..., 15.n in den Fig. 2 bis 4 weggelassen.

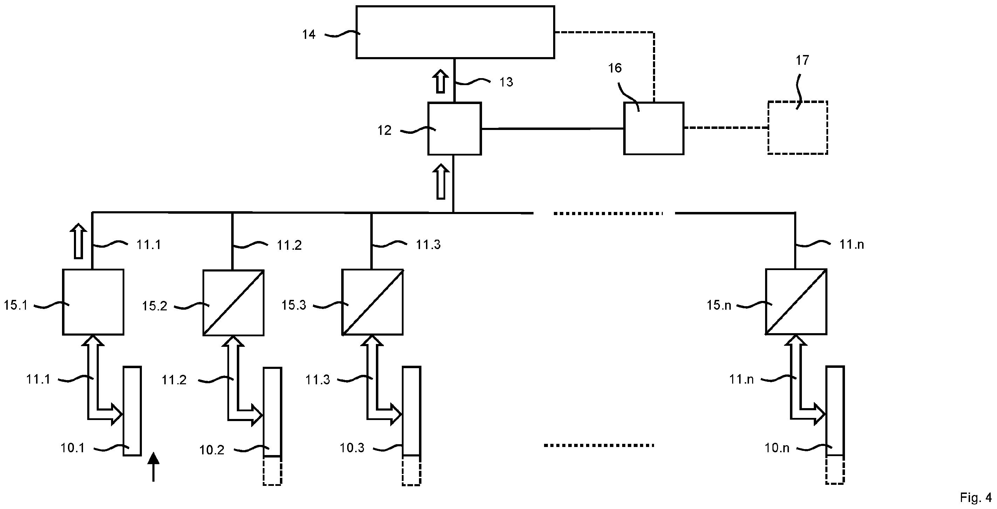

Fig. 4 zeigt eine schematische Darstellung einer anderen Betriebsart der Anordnung aus Fig. 2. Das zentrale hydraulische Steuerventil 12 ist wieder geöffnet und ermöglicht in dieser Betriebsart den Abfluss des hydraulischen Fluids aus den Hydraulikleitungen 11.1, ..., 11.n zum hydraulischen Versorgungssystem 14 hin. Lediglich die Ventileinrichtung 15.1 ist geöffnet und ermöglicht so das Abfließen des Hydraulikfluids aus dem hydraulischen Stellelement 10.1, wodurch dieses aus der zweiten (ausgefahrenen) Stellung in die erste (eingefahrene) Stellung verlagert wird. Demgegenüber verbleiben die weiteren in Fig. 4 konkret gezeigten hydraulischen Stellelemente 10.2, 10.3, 10.n in der zweiten (ausgefahrenen) Stellung, da die jeweils zugeordnete Ventileinrichtung 15.2, 15.3, 15.n geschlossen oder gesperrt ist, so dass kein Hydraulikfluid abfließen kann.

Alternativ zu den erläuterten Ausführungsbeispielen für die Betriebsarten der Anordnung aus Fig. 2 können alle Ventileinrichtungen 15.1, ..., 15.n geöffnet oder geschlossen werden, so dass alle hydraulischen Stellelemente 10.1, ..., 10.n in gleicher Weise eingestellt werden hinsichtlich der jeweiligen Stellung.

Anhand der Fig. 5 bis 7 wird nachfolgend beispielhaft dargestellt, wie sich die Verlagerung der Stellung der hydraulischen Stellelemente 10.1, ..., 10.n der Ausbringvorrichtungen 4 der Reihenanordnung 3 der landwirtschaftlichen Sämaschine 1 für das Einstellen einer Eindringtiefe bei der Furchenbildungseinrichtung auswirken.

Fig. 5 zeigt schematische Darstellungen einer Anordnung 20 für eine Furchenbildungseinrichtung mit einem Rahmenbauteil 21, an dem eine Schneideinrichtung 22, die mit einer oder zwei Schneidscheiben gebildet sein kann, schwenkbar aufgenommen ist. Der Schneideinrichtung 22 ist eine Tiefeneinstelleinrichtung 23 zugeordnet, die im gezeigten Beispiel mit einem Tiefeneinstellrad 24 an einem Tragarm 25 gebildet ist, welcher um eine Schwenkachse 26 schwenkbar an dem Rahmenbauteil 21 aufgenommen ist. Bei der Verwendung der Anordnung aus Fig. 5 in einer der Ausbringvorrichtungen 4 der landwirtschaftlichen Sämaschine 1 ist der Anordnung 20 eines der hydraulischen Stellelemente 10.1, ..., 10.n zugeordnet, derart, dass mit Hilfe des hydraulischen Stellelementes eine Relativposition des Tiefeneinstellrads 24 zu der Schneideinrichtung 22 veränderbar ist, indem das hydraulische Stellelement zwischen unterschiedlichen Stellungen verlagert wird, so dass die Schneideinrichtung 22 in den Erdboden E eindringt (vgl. linke Darstellung in Fig. 5) oder oberhalb des Erdbodens E angeordnet ist (vgl. rechte Darstellung in Fig. 5). In ähnlicher Weise kann mittels Einstellen der Relativposition zwischen Schneideinrichtung 22 und Tiefeneinstellrad 24 die Eindringtiefe der Schneideinrichtung 22 im Erdboden E eingestellt werden, wenn die Schneideinrichtung 22 mit dem Erdboden E zum Herstellen einer Furche in Kontakt tritt.

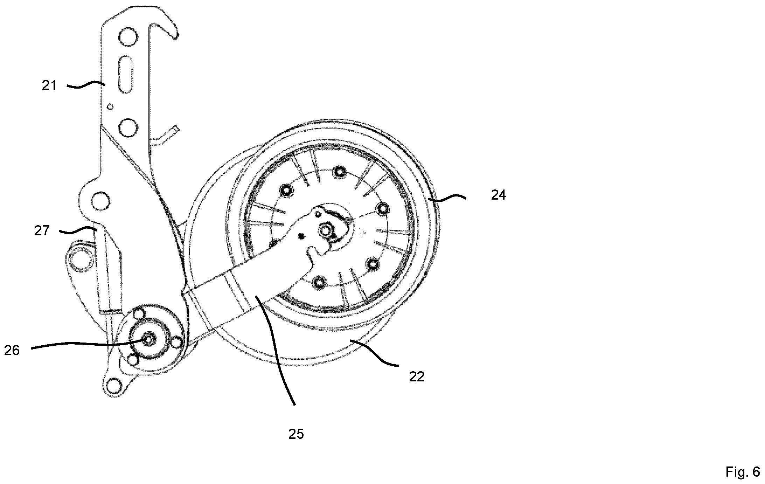

Fig. 6 zeigt eine angehobene Stellung der Schneideinrichtung 22 und der Tiefeneinstellrichtung 23, wozu ein hydraulischer Zylinder 27 betätigt wird, um Schneideinrichtung 22 und Tiefeneinstellrichtung 23 an dem Rahmenbauteil 21 nach oben zu schwenken.

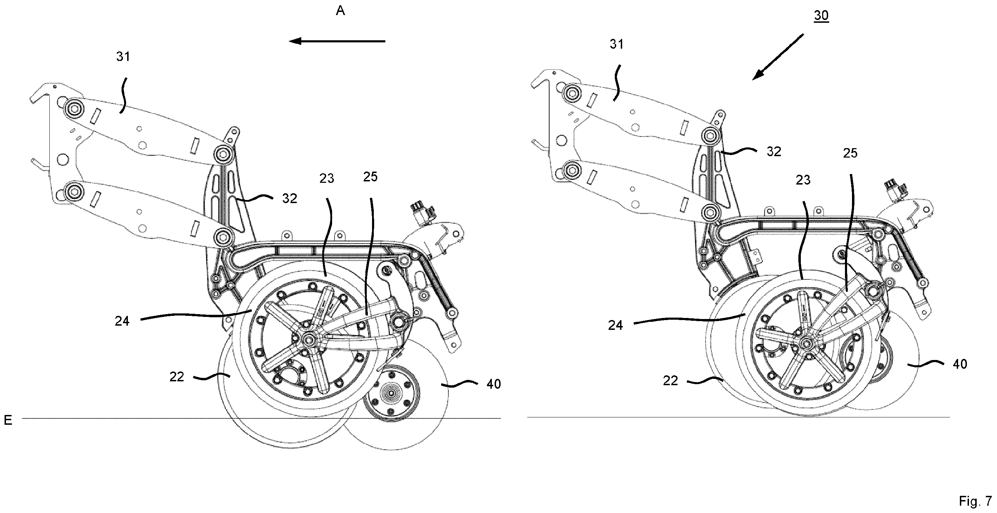

Fig. 7 zeigt eine Anordnung 30 für eine jeweilige Ausbringvorrichtung 4 der landwirtschaftlichen Sämaschine 1 mit einer Parallelogramm-Halterung 31, an der ein Rahmenbauteil 32 gelagert ist. Vergleichbar der Darstellung in den Fig. 5 und 6 sind eine Schneideinrichtung 22 und eine Tiefeneinstelleinrichtung 23 vorgesehen, bei der ein Tiefeneinstellrad 24 an einem Tragarm 25 aufgenommen ist. Gemäß der linken Darstellung in Fig. 7 dringt Schneideinrichtung 22 zum Herstellen der Furche in den Erdboden E ein. Bei der rechten Darstellung in Fig. 7 ist die Schneideinrichtung 22 aus dem Erdboden E ausgehoben. Entsprechend weisen Schneideinrichtung 22 und Tiefeneinstellrad 24 hier im Vergleich zur linken Darstellung in Fig. 7 eine geänderte Relativlage zueinander, was mit Hilfe einer Stellungsänderung eines zugeordneten der Stellelemente 10.1, ..., 10.n bewirkt wird.

Bei dem Ausführungsbeispiel in Fig. 7 ist eine Fangrolle 40 vorgesehen, mit welcher eine verbesserte Fixierung des ausgebrachten Saatguts in der Saatfurche erreichbar ist.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Landwirtschaftliche Sämaschine (1), mit:
- einer quer zu einer Arbeitsrichtung ausgebildeten Reihenanordnung (3) von Ausbringvorrichtungen (4), welche jeweils Folgendes aufweisen:
- eine Furchenbildungseinrichtung, bei dem ein Bodenbearbeitungswerkzeug eingerichtet ist, im Betrieb zum Ausbilden einer Furche mit einer Eindringtiefe in den Erdboden einzudringen;
- ein hydraulisches Stellelement (10.1, ..., 10.n), welches der Furchenbildungseinrichtung zugeordnet und zum Einstellen einer ersten Eindringtiefe für das Bodenbearbeitungswerkzeug in eine erste Stellung und zum Einstellen einer zweiten Eindringtiefe für das Bodenbearbeitungswerkzeug, die von der ersten Eindringtiefe verschieden ist, in eine zweite Stellung verlagerbar ist, welche von der ersten Stellung verschieden ist; und
- eine Ventileinrichtung (15.1, ..., 15.n), die dem hydraulischen Stellelement (10.1, ..., 10.n) zugeordnet ist;
- einem zentralen hydraulischen Steuerventil (12) und Hydraulikleitungen (11.1, ..., 11.n), wobei
- für das hydraulische Stellelement (10.1, ..., 10.n) der Ausbringvorrichtungen (4) jeweils über eine der Hydraulikleitungen (11.1, ..., 11.n) eine Fluidverbindung zu dem zentralen hydraulischen Steuerventil (12) ausgebildet ist und
- das zentrale hydraulische Steuerventil (12) eingerichtet ist, für mehrere der Hydraulikleitungen (11.1, ..., 11.n) gemeinsam einen Zufluss eines Hydraulikfluids aus einem Reservoir sowie einen Abfluss des Hydraulikfluids in das Reservoir betriebsabhängig freizugeben;
- einer Steuereinrichtung (16), die mit dem zentralen hydraulischen Steuerventil (12) und der jeweiligen Ventileinrichtung (15.1, ..., 15.n) der Ausbringvorrichtungen funktional verbunden ist;
wobei
- die Ventileinrichtung (15.1, ..., 15.n) der Hydraulikleitung des jeweiligen hydraulischen Stellelements (10.1, ..., 10.n) zugeordnet und eingerichtet ist, die Fluidverbindung über die jeweilige Hydraulikleitung betriebsabhängig zu öffnen und zu schließen; und
- die Steuereinrichtung (16) eingerichtet ist, beim gemeinsamen Zufluss oder Abfluss des Hydraulikfluids für wenigstens einen Teil der mehreren Hydraulikleitungen (11.1, ..., 11.n) die jeweilige Ventileinrichtung (15.1, ..., 15.n)
- zum Verlagern des hydraulischen Stellelements (10.1, ..., 10.n) in die erste Stellung zu öffnen, wenn mittels der Steuereinrichtung (16) für das zentrale Steuerventil (12) für die mehreren Hydraulikleitungen (11.1, ..., 11.n) gemeinsam der Abfluss des Hydraulikfluids in das Reservoir freigegeben ist,
- zum Verlagern des hydraulischen Stellelements (10.1, ..., 10.n) in die zweite Stellung zu öffnen, wenn mittels der Steuereinrichtung (16) für das zentrale hydraulische Steuerventil (12) für die mehreren Hydraulikleitungen (11.1, ..., 11.n) gemeinsam der Zufluss des Hydraulikfluids aus dem Reservoir freigegeben ist, und
- im Übrigen zu schließen.

2. Landwirtschaftliche Sämaschine (1) nach Anspruch 1, dadurch ge k e n n z e i c h n e t, dass die Steuereinrichtung (5) weiterhin eingerichtet ist, die Ventileinrichtung (15.1, ..., 15.n) in wenigstens einer ersten der mehreren Hydraulikleitungen (11.1, ..., 11.n) beim gemeinsamen Zufluss des Hydraulikfluids zu schließen.

3. Landwirtschaftliche Sämaschine (1) nach Anspruch 1 oder 2, dadurch gekenn-z e i c h n e t, dass die Steuereinrichtung (16) weiterhin eingerichtet ist, die Ventileinrichtung (15.1, ..., 15.n) in wenigstens einer zweiten der mehreren Hydraulikleitungen (11.1, ..., 11.n) beim gemeinsamen Abfluss des Hydraulikfluids die Ventileinrichtung (15.1, ..., 15.n) zu schließen.

4. Landwirtschaftliche Sämaschine (1) nach mindestens einem der vorangehenden Ansprüche, **dadurch gekennzeichnet, dass** die Ausbringvorrichtungen (4) jeweils eine dem hydraulischen Stellelement (10.1, ..., 10.n) zugeordnete Messeinrichtung aufweisen, die mit der Steuereinrichtung (16) funktional verbunden und eingerichtet ist, einen Messparameter zu erfassen, welcher unterschiedliche Stellungen des hydraulischen Stellelements (10.1, ..., 10.n) beim Einstellen der Eindringtiefe für die Furchenbildungseinrichtung anzeigt.

5. Landwirtschaftliche Sämaschine (1) nach Anspruch 4, **dadurch gekennzeichnet, dass** die Steuereinrichtung (16) weiterhin eingerichtet ist, die jeweilige Ventileinrichtung (15.1, ..., 15.n) in Abhängigkeit von dem mittels der Messeinrichtung für das zugeordnete hydraulische Stellelement (10.1, ..., 10.n) erfassten Messparameter zu öffnen und zu schließen.

6. Landwirtschaftliche Sämaschine (1) nach mindestens einem der vorangehenden Ansprüche, **dadurch gekennzeichnet, dass** das hydraulische Stellelement (10.1, ..., 10.n) in der ersten Stellung eine erste Längenausdehnung und der zweiten Stellung eine zweite Längenausdehnung aufweist, die von der ersten Längsausdehnung verschiedene ist.

7. Landwirtschaftliche Sämaschine (1) nach mindestens einem der vorangehenden Ansprüche, **dadurch gekennzeichnet, dass** das hydraulische Stellelement (10.1, ..., 10.n) eingerichtet ist, beim Verlagern aus der zweiten in die erste Stellung den Abfluss des Hydraulikfluids über die Ventileinrichtung (15.1, ..., 15.n) in der Hydraulikleitung (11.1, ..., 11.n) aufgrund einer Rückstellkraft zu bewirken, welche beim Kontakt der Furchenbildungseinrichtung mit dem Erdboden auf die Furchenbildungseinrichtung ausgeübt wird.

8. Landwirtschaftliche Sämaschine (1) nach mindestens einem der vorangehenden Ansprüche, **dadurch gekennzeichnet, dass**
- bei der Furchenbildungseinrichtung das Bodenbearbeitungswerkzeug mit einer Schneideinrichtung (22) gebildet ist;
- Furchenbildungseinrichtung eine der Schneideinrichtung (22) zugeordnete Tiefeneinstelleinrichtung (23) aufweist, die eingerichtet ist, mittels Verlagern in eine erste und eine zweite Stellung für die Schneideinrichtung (22) eine erste und eine zweite Eindringtiefe zum Ausbilden der Furche einzustellen; und
- das hydraulische Stellelement (10.1, ..., 10.n) mit der Tiefeneinstelleinrichtung (23) verbunden und eingerichtet ist, die Tiefeneinstelleinrichtung (23) in die erste und die zweite Stellung zu verlagern.

9. Landwirtschaftliche Sämaschine (1) nach Anspruch 8, **dadurch gekennzeichnet, dass** die Schneideinrichtung (22) mindestens eine Schneidscheibe aufweist, für die mittels der Tiefeneinstelleinrichtung (23) die erste und die zweite Eindringtiefe zum Ausbilden der Furche einstellbar sind.

10. Landwirtschaftliche Sämaschine (1) nach Anspruch 8 oder 9, dadurch gekenn - z e ich n e t, dass die Tiefeneinstelleinrichtung (23) mindestens ein Tiefeneinstellrad (24) aufweist, welches im Betrieb zum Ausbilden der Furche auf dem Erdboden rollt.

11. Landwirtschaftliche Sämaschine (1) nach mindestens einem der vorangehenden Ansprüche, **dadurch gekennzeichnet, dass** die Steuereinrichtung (16) mit einer Sensoreinrichtung funktional verbunden ist, die eingerichtet ist, ein Betriebsparameter für das Ausbringen des Saatguts und / oder des Düngermaterials zu erfassen, wobei die Steuereinrichtung (16) eingerichtet ist, von der Sensoreinrichtung Sensorsignale zu empfangen, die den Betriebsparameter anzeigen, und zum Einstellen der Eindringtiefe für die Furchenbildungseinrichtung das zentrale hydraulische Steuerventil (3) und / oder die Ventileinrichtung (15.1, ..., 15.n) zu steuern.

12. Landwirtschaftliche Sämaschine (1) nach Anspruch 11, dadurch gekennzeichnnet, dass die Sensoreinrichtung eingerichtet ist, mindestens einen Betriebsparameter aus der folgenden Gruppe zu erfassen: Bodenfeuchtigkeit, Lufttemperatur, Luftfeuchtigkeit, Niederschlag (Regensensor), Fahrgeschwindigkeit und geografische Position.

13. Landwirtschaftliche Sämaschine (1) nach mindestens einem der vorangehenden Ansprüche, **dadurch gekennzeichnet, dass** die Ausbringvorrichtungen weiterhin jeweils Folgendes aufweisen:
- eine weitere Furchenbildungseinrichtung, die eingerichtet ist, im Betrieb zum Ausbilden einer Furche in den Erdboden mit einer Eindringtiefe einzudringen;
- ein weiteres hydraulisches Stellelement (10.1, ..., 10.n), welches der weiteren Furchenbildungseinrichtung zugeordnet ist und zum Einstellen einer ersten Eindringtiefe in eine erste Stellung und zum Einstellen einer zweiten Eindringtiefe, die von der ersten Eindringtiefe verschieden ist, in eine zweite Stellung verlagerbar ist, welche von der ersten Stellung verschieden ist; und
- eine weitere Ventileinrichtung (15.1, ..., 15.n), die dem weiteren hydraulischen Stellelement (10.1, ..., 10.n) zugeordnet ist.

14. Landwirtschaftliche Sämaschine (1) nach mindestens einem der vorangehenden Ansprüche, **dadurch gekennzeichnet, dass** mit der quer zur Arbeitsrichtung ausgebildeten Reihenanordnung (3) von Ausbringvorrichtungen (4) eine Reihenanordnung von Säreihen gebildet ist.
